# EUROPEAN PATENT APPLICATION

(11) **EP 2 991 287 A1**
(43) Date of publication of application: **02.03.2016**
(21) Application number: 14306345.1
(22) Date of filing: 01.09.2014
(51) Int. Cl.: H04L 12/721, H04W 40/10, H04L 29/08

(54) **Apparatus and method for providing energy consumption related information in a distributed computer network**

(71) Applicant: ALCATEL LUCENT, 92100 Boulogne-Billancourt (FR)
(72) Inventor: Banniza, Thomas-Rolf, 70435 Stuttgart (DE); Bunse, Stephan, 70435 Stuttgart (DE)
(74) Representative: 2SPL Patentanwälte PartG mbB

(57) **Abstract**

Embodiments relate to a concept distributed computer network (100). The concept includes providing (210), by an energy information server (102) coupled to the network (100), information related to energy consumption caused by a data transfer between two or more nodes (104; 106; 108; 110) of the distributed computer network (100).

## Description

Embodiments of the present disclosure generally relate to distributed computer networks and, more particularly, to methods and apparatuses for providing energy consumption related information for such networks.

### Background

This section introduces aspects that may be helpful in facilitating a better understanding of embodiments. Accordingly, the statements of this section are to be read in this light and are not to be understood as admissions about what is in the prior art or what is not in the prior art.

Currently, information systems are known which provide network specific information of computer networks, such as, for example, capacity, delay, general costs, etc. Such information may be used for data load or store location optimization with respect to those parameters, i.e., capacity, delay, general costs, etc. A use of general routing cost information is currently discussed in the Internet Engineering Task Force (IETF) Application-Layer Traffic Optimization (ALTO) group.

However, an optimization of distributed networks focused on network performance may contradict with other important requirements. Hence, there is a desire to provide improved or further information with respect to distributed computer networks.

### Summary

Some simplifications may be made in the following summary, which is intended to highlight and introduce some aspects of the various example embodiments, but such simplifications are not intended to limit the scope embodiments. Detailed descriptions of preferred example embodiments adequate to allow those of ordinary skill in the art to make and use the inventive concepts will follow in later sections.

According to a first aspect of the present disclosure, embodiments provide a method for a distributed computer network. The method includes providing information related to energy consumption caused by data transfer between two or more nodes of the distributed computer network.

In embodiments, the distributed computer network denotes a distributed network system which is said to be "distributed" when computer programming and data to be worked on are spread out over more than one computer. Thereby the different computers may form network nodes, which may be located at remote locations with respect to each other.

In the present disclosure, the term "energy consumption" may be considered as an amount of physical energy, e.g. electrical energy, that is needed to transport a certain amount of data and, if necessary, to save or load it at a remote network node. Hence, in some embodiments, the data transfer may include storing data at and/or retrieving data from a remote network node.

The term "energy consumption" may also be considered to comprise costs or carbon footprints due to physical energy consumption. In some embodiments, providing the information related to energy consumption may hence include providing information on energy costs related to the data transfer between the two or more nodes of the distributed computer network. That is to say, in one embodiment, information related to energy consumption may equal information on energy costs. In another embodiment, information on energy consumption may be supplemented by information on energy costs, for example, energy costs per energy unit.

Additionally or alternatively, providing the information related to energy consumption may include providing information on carbon footprints related to the data transfer between the two or more nodes of the distributed computer network. That is to say, in one embodiment, information related to energy consumption may equal information on carbon footprints. In another embodiment, information on energy consumption may be supplemented by information on one or more carbon footprints. Here, a carbon footprint may be defined as a set of greenhouse gas emissions caused by one or more network nodes in response to the data transfer between the two or more nodes.

In some embodiments, the method may further include, prior to providing the information related to energy consumption, obtaining the information on a respective network node's energy consumption from the two or more nodes of the distributed computer network. For that purpose, the method may include measuring or estimating the energy consumption of the respective network node. The network or one or more network nodes may hence comprise an electricity meter or energy meter configured to measure the amount of electric energy consumed by one or more network nodes.

In some embodiments, the information related to energy consumption may be provided in response to a query from an application interested in the data transfer. Additionally or alternatively, the information on energy consumption may published in accordance with a publish-subscribe messaging pattern.

In some embodiments, the method may further include storing the information related to energy consumption in a database coupled to an energy information server. For example, the information may be stored in a normalized or abstracted format to render the information comparable and/or secure.

In some embodiments, providing the information may include providing information related to energy consumption caused by each network device of the distributed computer network, and/or providing information related to energy consumption caused by one or more network links between linked distinct nodes of the distributed computer network. Thereby, a network device may be a network node, such as computer, a data storage device, or the like. A network link may include network devices, such as network switches, network routers, network cables or fibers, etc.

In one or more embodiments, the method may also include predetermining information related to energy consumption caused by frequently demanded or desired network routes between two or more nodes of the distributed computer network. This may enable quick information access related to frequently demanded network routes.

In some embodiments, the method may further include selecting, based on information on physical energy consumption and/or energy costs of network devices, at least one source or target network node minimizing an energy cost function for the data transfer.

Additionally or alternatively, the method may include selecting, based on information on physical energy consumption and/or carbon footprints of network devices, at least one source or target network node minimizing a carbon emission related to the data transfer.

In some embodiments, the information may be provided using a predefined data protocol. For example, this may be a version of the ALTO protocol currently under definition by the IETF ALTO group or a protocol similar thereto.

In some embodiments, the method may further include determining, based on the information related to energy consumption, at least one routing rule between the two or more remote network nodes. This may enable an energy-aware traffic routing.

According to a further aspect of the present disclosure, embodiments also provide an apparatus for a distributed computer network. The apparatus comprises an energy information server configured to provide information on or related to energy consumption, wherein the energy consumption is related to a desired data transfer between two or more nodes of the distributed computer network.

Some embodiments comprise digital circuitry installed within the apparatus for performing the respective aforementioned methods. Such a digital control circuitry, e.g., a Digital Signal Processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing embodiments of the method, when the computer program is executed on a computer or a programmable hardware device.

If, for example, an application running on a given computer or network node needs to load data which is available at more than one remote network node or knows more than one remote network nodes where it could store data, embodiments propose a selection of the remote location or network node by taking into account energy consumption related network information to allow minimization of energy consumption or related costs of data load or store action. The present disclosure deals with a network information system for provision of such information.

### Brief description of the Figures

Some embodiments of apparatuses and/or methods will be described in the following by way of example only, and with reference to the accompanying figures, in which
- Fig. 1: illustrates an example energy information server coupled to a distributed network; and
- Fig. 2: shows a flowchart of a method for a distributed computer network, according to an embodiment.

### Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures. It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g.., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and/or components, but do not preclude the presence or addition of one or more other features, integers, steps, operations, elements, components and/ or group thereof.

It should also be noted that in some alternative implementations, the functions/ acts noted may occur out of the order noted in the figures. For example, figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), Application-Specific Integrated Circuits, Field Programmable Gate Arrays (FPGAs), computers, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

As disclosed herein, the term "storage medium", "storage unit" or "computer readable storage medium" may represent one or more devices for storing data, including Read Only Memory (ROM), Random Access Memory (RAM), magnetic RAM, core memory, magnetic disk storage mediums, optical storage mediums, flash memory devices and/ or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and /or receiving information, data, arguments, parameters or memory contents. Information, arguments, parameters, data, etc. may be passed, forwarded, or transmitted via any suitable means including memory sharing, message passing, token passing, network transmission, etc.

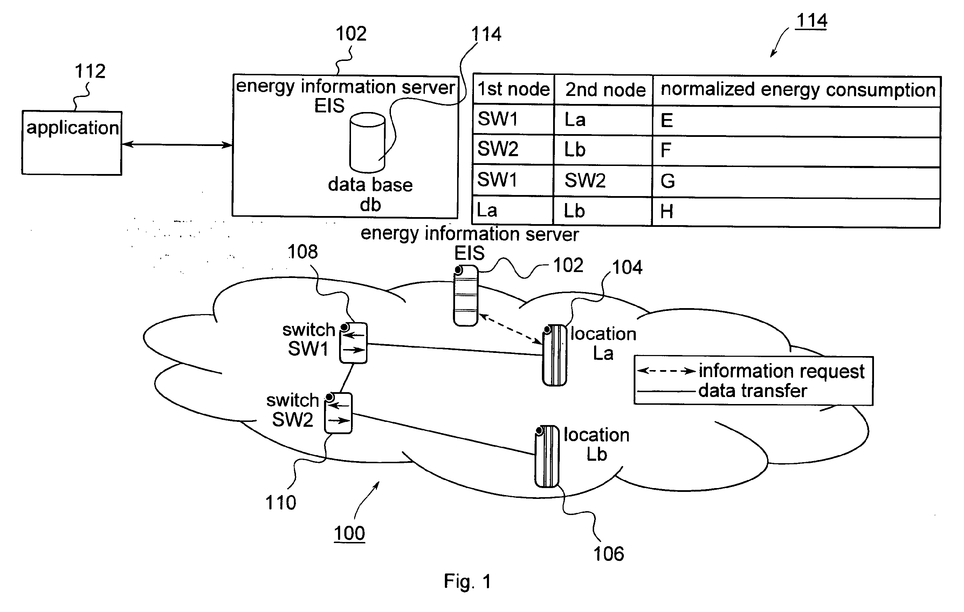

**Fig. 1** schematically illustrates a part of a distributed computer network 100, according to an embodiment.

The distributed network 100 includes an apparatus comprising an energy information server 102 which is configured to provide information related to energy consumption, the energy consumption being related to a data transfer between two or more computing nodes 104, 106 at distant network locations La, Lb of the distributed computer network 100. The data transfer may be a desired future data transfer. That is to say, it does not need to have actually have occurred before the information provision.

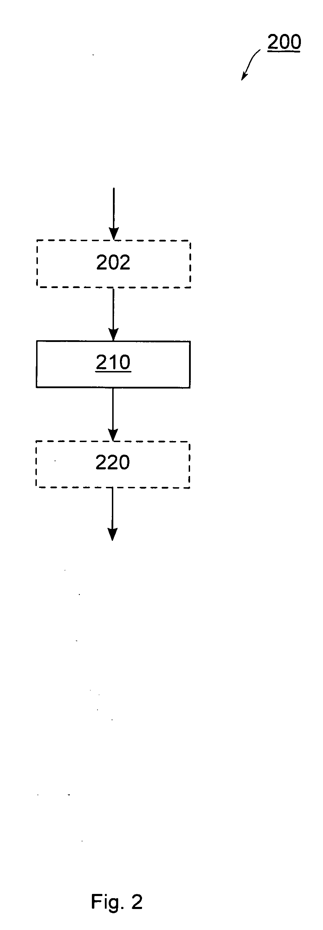

The skilled person having benefit from the present disclosure will also appreciate that the energy information server 102, which may include a programmable hardware device, may perform a corresponding method 200 for the distributed computer network 100. A flowchart of method 200 is schematically shown in **Fig. 2****.**

Method 200 includes an act 210 of providing information related to energy consumption caused by a data transfer between the two or more nodes 104, 106 of the distributed network 100. The information related to energy consumption may include information on physical energy consumption, information on energy costs (i.e., monetary energy consumption) and/or information on carbon footprints related to the data transfer between the two or more nodes 104, 106 of the distributed computer network 100.

In some embodiments, "energy consumption" may be considered as an amount of (electrical) energy that is needed to transport a certain amount of data and, if necessary, to save or to load it. Hence, the data transfer between the different network nodes 104, 106 at remote locations La, Lb may include transporting the data between the network nodes and/or storing the data at and/or retrieving the data from one of the distributed network nodes 104, 106. The skilled person will of course appreciate that data retrieval, data transport, and data storage do consume electrical energy at the network nodes 104, 106 and potential further optional network devices 108, 110, such as, e.g., network switches and/or routers, that may be coupled in between the nodes 104, 106. The involved network devices 104, 106, 108, 110 do consume electrical energy, depending on various factors, such as respective size, respective computational capabilities, respective load, etc.

In some embodiments, the network nodes 104, 106 may comprise respective digital memories for network storage, as applied in cloud storage, for example. Thereby cloud storage is a model of data storage where digital data is stored in logical pools, physical storage spans across multiple servers (and often locations), and the physical environment, e.g. the network 100, is typically owned and managed by a hosting cloud service provider.

In some embodiments, energy information server 102 coupled to the network 100 may receive requests from (software) applications 112 running on computers and return answers using a convenient predefined protocol, e.g., a protocol equal or similar to the ALTO protocol currently under definition by IETF ALTO group. That is to say, act 210 of providing the information related to or on energy consumption caused by a desired data transfer within the network 100 may include providing the information related to energy consumption in response to a query from an application 112 interested in the data transfer between two or more computing nodes 104, 106 of the distributed computer network 100. Thereby the application may be a software application running on a programmable hardware device coupled to the distributed network 100. Such a programmable hardware device may be a general purpose computer or a mobile device, such as a smartphone, for example.

A request from application 112 may specify addresses of the end points of one or more connections or links for which application 112 would like to have the energy consumption information from the server 102. Energy information server 102 may return the requested information. In the example illustrated in Fig. 1, the end points may be network nodes 104 and 106.

Act 210 of providing the information related to energy consumption caused by a data transfer within the network 100 may additionally or alternatively include publishing the information in accordance with a publish-subscribe messaging pattern. Here, senders of information messages, called publishers, need not program the messages to be sent directly to specific receivers, called subscribers. Instead, published messages may be characterized into classes, without knowledge of what, if any, subscribers there may be. Similarly, subscribers express interest in one or more classes, and only receive messages that are of interest, without knowledge of what, if any, publishers there are. In the present example, software application 112 would act as a subscriber, while energy information server 102 would act as publisher.

Prior to act 210 of providing the information related to energy consumption of a data transfer with the network 100, method 200 may include an optional act 202 of obtaining information on a respective computing node's energy consumption from the two or more network devices 104, 106, 108, 110 in the distributed computer network 100. This may include measuring or estimating the energy consumption of the respective network devices 104, 106, 108, 110. Electrical energy consumption may be measured using a variety of known electrical power meters, for example. Estimation of electrical energy may involve a consideration of past electrical energy values and/or an amount of hard- and/or software resources used at a respective network node, for example.

To provide the information related to energy consumption, energy information server 102 may comprise or may be coupled to a local or remote energy information database 114, in some embodiments. For example, energy information database 114 may contain normalized values describing the energy consumption related to data transfer between different network locations La, Lb. Such data transfer may also involve different switches SWu and SWv in the network 100. In the illustrative example of Fig. 1, energy information database 114 includes a first normalized energy consumption value "E" related to a data transfer between network switch 108 (SW1) and data server 104 at location La. Further, energy information database 114 includes a second normalized energy consumption value "F" related to a data transfer between network switch 110 (SW2) and data server 106 at location Lb. Energy information database 114 also includes a third normalized energy consumption value "G" related to a data transfer between both network switches 108 and 110 (SW1 and SW2). Finally, in the illustrative example of Fig. 1 energy information database 114 includes a fourth normalized energy consumption value "H" related to a data transfer between data server 104 at location La and data server 106 at location Lb (via switches 108 and 110). Hence, the fourth normalized energy consumption value "H" may at least substantially correspond to a sum of the first three normalized energy consumption values "E", "F", and "G".

If application 112 needs information about the energy consumption of a given relation, energy information server 102 may derive the requested information from energy information database 114. Hence, method 200 may also comprise storing the information on energy consumption in database 114 coupled to energy information server 102. To enable this, energy information database 114 may contain an entry for one or more (La, Lb) relations and/or further entries for the sub-links between locations Lx and intermediate switches SWy and between the intermediate switches SW1, SW2. In this way, energy information server 102 may determine the total value of each (La, Lb) relation in the network 100 by combination of the sub link values, thereby taking into account the traffic routing rules in the network 100. To optimize server performance, the table in database 114 can additionally comprise pre-calculated values for frequently demanded (La, Lb) relations, e.g., see last entry in example table in Fig. 1. Method 200 may hence include an optional act of predetermining information on energy consumption related to frequently demanded network routes between two or more nodes of the distributed computer network 100 and storing said predetermined information in database 114.

In some embodiments, energy information server 102 or the energy information database 114 may additionally hold information about energy prices, the CO₂ foot print and the amount of energy needed to retrieve or store data on a specific data server or network node. Providing 210 the energy consumption information may hence comprise providing information on energy costs and/or on carbon footprints related to the data transfer between the two or more nodes of the distributed computer network. Energy costs or carbon footprints may be considered as physical energy consumption values multiplied or weighted by a local energy supply cost or their local carbon footprint. In some embodiments, the provided information related to energy consumption may only contain the monetary energy costs and/or carbon footprints as a measure of the physical energy consumption related to the desired data transfer. Hence, instead of communicating neutral energy values, embodiments may also use energy units weighted with the costs per unit as information of interest.

In some embodiments, method 200 may include an optional act 220 of determining, using the information on energy consumption, at least one routing rule between the two or more network nodes 104, 106. For example, act 220 may include selecting, based on the information on energy consumption and/or energy costs, at least one source or target network node minimizing an energy cost function for the data transfer. For another example, act 220 may include selecting, based on the information on energy consumption and/or carbon footprints, at least one source or target network node minimizing a carbon emission related to the data transfer.

When selecting at least one source or target network node minimizing a (carbon) cost function a request may contain a source (target) network address and a plurality of potential target (source) addresses for the data transfer. Using said list, energy information server 102 may provide the most (energy or cost) efficient network route between the source (target) and one of the target (source) addresses.

To summarize, optimization of energy consumption is a general issue for telecom network operators. As applications more and more will run on servers in a computing cloud, and the locations of these servers and data storage locations might be more and more locally distributed (e.g., to increase reliability, to limit delay between client and server), those applications need means to select e.g. remotely located data storage or data source locations according to various constraints. Embodiments allow applications to make these decisions taking into account energy cost. Embodiments propose an Energy Information Server to collect, compile, and administer energy consumption information from possibly all network resources and attached data servers in a network. The Energy Information Server may collect information about energy consumption cost of data transfer and retrieval in the network from the network resources and servers, may compile the information and may provide it in an abstracted from to applications running on servers (dedicated or forming a cloud). The information can be provided to the application in a request/answer or a publish/subscribe association.

The description and drawings merely illustrate the principles of embodiments the invention. It will thus be appreciated that those skilled in the art will be able to devise various arrangements that, although not explicitly described or shown herein, embody the principles of example embodiments. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative hardware or circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

Further, it is to be understood that the disclosure of multiple acts or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. Method (200) for a distributed computer network (100), the method comprising:
providing (210) information related to energy consumption caused by a data transfer between two or more nodes (104; 106; 108; 110) of the distributed computer network (100).

2. The method (200) of claim 1, wherein the data transfer includes storing data at and/or retrieving data from a network node (104; 106; 108; 110).

3. The method (200) of claim 1, further comprising:
obtaining information on a respective network node's energy consumption from the two or more nodes (104; 106; 108; 110) of the distributed computer network (100).

4. The method (200) of claim 1, wherein providing (210) the information comprises measuring or estimating the energy consumption of the respective network node.

5. The method (200) of claim 1, wherein the information related to energy consumption is provided in response to a query from an application interested in the data transfer.

6. The method (200) of claim 1, wherein the information related to energy consumption is published in accordance with a publish-subscribe messaging pattern.

7. The method (200) of claim 1, further comprising:
storing the information related to energy consumption in a database (114) coupled to an energy information server (102).

8. The method (200) of claim 1, wherein providing (210) the information comprises
providing information related to energy consumption caused by each network device of the distributed computer network (100), and/or
providing information related to energy consumption caused by one or more network links between linked distinct nodes (104; 106; 108; 110) of the distributed computer network (100).

9. The method (200) of claim 1, further comprising:
predetermining information related to energy consumption caused by frequently demanded network routes between two or more nodes (104; 106; 108; 110) of the distributed computer network (100).

10. The method (200) of claim 1, wherein providing (210) the information related to energy consumption comprises
providing information on energy costs and/or on carbon footprints related to the data transfer between the two or more nodes (104; 106; 108; 110) of the distributed computer network (100).

11. The method (200) of claim 1, further comprising:
determining (220), based on the information related to energy consumption, at least one routing rule between the two or more network nodes (104; 106; 108; 110).

12. The method (200) of claim 1, further comprising:
selecting, based on information on energy consumption and/or energy costs, at least one source or target network node minimizing an energy cost function for the data transfer.

13. The method (200) of claim 1, further comprising:
selecting, based on information on energy consumption and/or carbon footprints, at least one source or target network node minimizing a carbon emission related to the data transfer.

14. The method of claim 1, wherein the information is provided using a predefined data protocol.

15. Apparatus for a distributed computer network (100), the apparatus comprising:
an energy information server (102) configured to provide information related to energy consumption caused by a data transfer between two or more nodes (104; 106; 108; 110) of the distributed network (100).
